# EUROPEAN PATENT SPECIFICATION

(11) **EP 1 783 660 B1**
(45) Date of publication and mention of the grant of the patent: **03.10.2012**
(21) Application number: 06123247.6
(22) Date of filing: 31.10.2006
(51) Int. Cl.: G06K 7/08, G06K 19/07, G06K 7/00, G06K 19/077

(54) **Memory card and terminal equipment incorporating the same**
Speicherkarte und diese enthaltendes Endgerät
Carte mémoire et équipement terminal intégrant celle-ci

(30) Priority: 31.10.2005 CN 200510100762
(43) Date of publication of application: 09.05.2007
(73) Proprietor: Huawei Technologies Co., Ltd., Shenzhen, Guangdong Province 518129 (CN)
(72) Inventor: Li, Jin, 518129, Guangdong Province (CN); Yang, Fang, 518129, Guangdong Province (CN)
(74) Representative: Körber, Martin Hans

(56) References cited:
- WO-A-2005/050384
- WO-A-2007/023473
- US-A1- 2005 224 589
- "SD RFID card" INTERNET CITATION, [Online] 15 March 2005 (2005-03-15), XP002387746 Retrieved from the Internet: URL:http://www.rfidnews.org/news/2005/03/1 5/sd-rfid-card/> [retrieved on 2006-06-28]

## Description

### Field of the Invention

The invention relates to a radio frequency identification (RFID) equipment. More particularly, the invention relates to a terminal equipment with radio frequency identification function.

### Background of the Invention

Radio Frequency Identification (RFID), commonly referred to as Electronic Tag, is a technique that utilizes spatial coupling (alternating magnetic field or electromagnetic field) of radio frequency signals to implement contactless information transmission and attain identification purpose with the transmitted information.

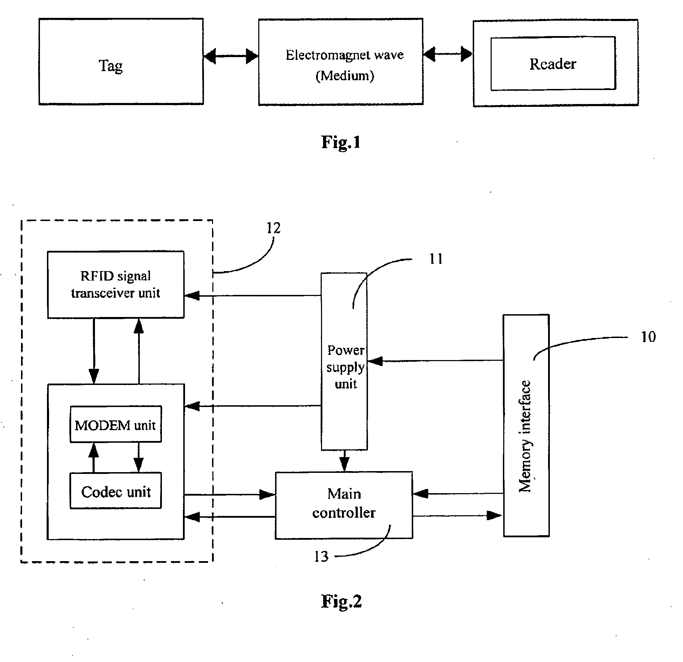

As shown in Fig. 1, a radio frequency identification system generally includes three parts:

a tag, which includes a coupling component and a chipset, has a respective unique electronic code and is attached to an object for identifying the object;

a reader, which is a device that reads (and writes in some cases) tag information and can be designed as a handheld type or a fixed type; and

a transmission medium,such as electromagnetic wave,which is used to transmit radio frequency signals between the tag and the reader.

When the tag enters into the transmission medium (e.g., magnetic field), product information stored on the tag (Passive Tag) is sent out by means of the energy obtained from an induced current, or the tag (Active Tag) sends signals at a certain frequency on its own initiative; the reader reads the information from the tag, decodes the information, and then sends the information to a central information system for relevant data processing. As an automatic contactless identification technique, RFID does not need manual intervention and has advantages that are not available in bar code technique, e.g., waterproofing, magnetic resistance, high temperature resistance, long service life, long reading distance, encrypted tag data, high data storage capacity, free modification of stored information, etc. Therefore, RFID technique has been used in many fields today, such as materials circulation and supply management, airline luggage handling, mail/express package handling, access control/electronic ticket, etc.

Existing terminal equipment can be extended to include RFID function. A mobile communication terminal with RFID function is disclosed in US Patent Application Publication No. 20050088285 entitled "Mobile communication terminal with RFID function and RFID programming method in the Same" and filed on Oct. 28, 2003 by Samsung, Korea; the technical solution disclosed therein is a mobile communication terminal including: a radio frequency identification (RFID) receiver for receiving RFID data in a first format; an operation device for converting the RFID data in the first format into a second format; a memory for storing the RFID data in the second format; a codec for encoding the RFID data stored in the memory; a modulator for RFID-modulating the encoded data output from the codec; and an RFID transmitter for transmitting the modulated data output from the modulator to an RFID reader.

In the prior art described in the above patent, though the object of extending the terminal to include RFID function can be attained by embedding an RFID module into the mobile communication terminal directly, the technique has the following drawbacks:

Firstly, most mobile communication terminals sold in the market do not have the RFID module. If a user wants to add RFID function to his/her own mobile terminal, the user has to buy an additional mobile communication terminal with a built-in RFID module, which is expensive and increases purchase cost of the user.

Secondly, there are diverse RFID protocols, and the RFID specifications in different protocols are different. Furthermore, different developers develop their own mobile communication products by employing different RFID protocols, which leads to poor RFID compatibility between different mobile terminals.

The Internet document "SD RFID card" available via the URL: "http://www.rfidnews.org/news12005/03/15/sd-rfid-card" discloses an SD RFID card which allows users to utilize their PDA and Smartphones as portable RFID terminals.

US Patent Application Publication No. US 2005/224589 discloses an SD card for extension of function, the SD card having functions of a contactless integrated circuit (IC) card and a contactless and/or contact IC card reader.

International Patent Application No. WO 2005/050384 discloses a compact personal token apparatus which can be plugged into a personal computer and interfaced with the virtual world of the Internet.

### Summary of the Invention

The present invention provides a system comprising a memory card with RFID function and a terminal equipment incorporating the memory card according to the independent claim. Preferred embodiments of the present invention are described in the dependent claims.

A system is provided according to an embodiment of the present invention comprising a terminal equipment and a memory card; the memory card further comprising: a memory unit adapted to store data comprising RFID configuration information and RFID data; a memory card interface adapted to exchange data stored in the memory unit with the terminal equipment; and an RFID function unit adapted to configure itself with the RFID configuration information stored in the memory unit and identify received radio frequency signals, said RFID function unit is further adapted to demodulate the radio frequency signals into corresponding RFID data; characterized in that the memory card is further adapted to exchange the data stored in the memory unit with the terminal equipment, when the memory card is mapped to the file system of the terminal equipment, the terminal accesses and configures the RFID unit in the memory card through an RFID virtual file, the terminal equipment performs read or write control for the memory card by installing a driver for the memory card in the operating system of the terminal equipment, and the RFID data in the memory card is updated in real time by the terminal's configuration capability for the RFID unit in the memory card.

Compared to the prior art, the invention may have the following benefits:

Firstly, the invention indirectly extends a handheld device to include RFID function through a memory card. If a user wants to add RFID function to his/her own handheld device, the user only needs to buy a memory card with RFID function as described in the invention and insert the memory card into the handheld device without having to buy a new handheld device. Therefore, the user's purchase cost is reduced greatly.

Secondly, the memory card can be replaced freely, so that the user may make his/her own handheld device compatible to any handheld device conforming to RFID protocol, and the invention may also expand RFID application domain to all handheld terminal products with a memory card interface. As long as the handheld device has the memory card interface, the user may extend the handheld device to include RFID function very conveniently by using the memory card with RFID function as described in the invention.

### Brief Description of the Drawings

Fig. 1 is schematic diagram of construction of an RFID system in the prior art;

Fig. 2 is a schematic diagram of internal structure of a memory card comprised in a system according to the invention;

Fig. 3 is a schematic diagram of operating system software hierarchy of a handheld device comprised in a system according to the invention;

Fig. 4 is a flowchart of RFID signal processing in a handheld device according to an embodiment of the invention.

### Detailed Description of the Preferred Embodiments

As communication technology develops, memory cards are used increasingly in handheld devices such as digital cameras, intelligent mobile telephones, MP3 devices, PDAs, and DVs, etc. Handheld devices can be extended to include new functions by embedding some modules with specific functions in memory cards and then combining the memory cards with the specific functions with the handheld devices.

Fig.2 is a schematic diagram of internal structure of a memory card according to an embodiment of the invention. A main controller 13 serves as a control unit of the memory card, and has a certain storage space which can be used as a memory unit to store information. In the embodiment of the invention, the information stored in the main controller 13 mainly includes memory card configuration information, RFID protocol, RFID data, and other RFID configuration information required in RFID communication process. Different RFID protocols can be loaded in the main controller 13 as required, so as to sufficiently solve the problem of poor RFID compatibility between different products. Of course, it is also possible to store the above information in a memory unit outside the main controller 13 in accordance with memory configuration of the main controller 13. The memory card is connected to external equipment via a memory card interface 10; a power supply unit 11 obtains power from the memory card interface 10 and supply power to other circuits in the memory card. The memory card according to the embodiment has an RFID function unit 12, which configures itself with the RFID configuration information stored in the memory unit and identifies received radio frequency signals. The RFID function unit 12 can be an RFID card reader unit or an RFID transponder unit. As an embodiment of the present invention shown in Fig.2, when the RFID unit 12 is an RFID card reader function unit, it includes:

a codec unit for encoding/decoding RFID data in accordance with card reading function as specified in RFID protocol;

a MODEM unit for modulating the RFID data into corresponding RFID signals or demodulating RFID signals into corresponding RFID data;

an RFID signal transceiver unit for sending/receiving the RFID signals to/from the MODEM unit.

Likewise, in another embodiment of the invention, if the RFID unit is an RFID transponder function unit, the RFID transponder function unit may also employ the following structure:

a codec unit (not shown) for encoding/decoding RFID data in accordance with induction function as specified in RFID protocol;

a MODEM unit (not shown) for modulating the RFID data into corresponding RFID signals or demodulating RFID signals into corresponding RFID data;

an RFID signal transceiver unit (not shown) for sending/receiving the RFID signals to/from the MODEM unit.

It should be noted that in particular embodiments, the RFID signal transceiver unit may be a coupling antenna usually in coil form. In addition, the RFID signal transceiver unit may be any device that can implement RFID signal sending/receiving function. Therefore, it is not described in detail here.

In the embodiment of the invention, the main controller 13 may receive or send relevant information in RFID communication process via the memory card interface 10. If the main controller 13 receives information from other devices, the received information is sent to the codec unit by the main controller 13, and then encoded in accordance with the RFID protocol loaded in the main controller 13 by the codec unit. After the information is modulated, it is sent out by the RFID signal transceiver unit. On the other hand, when an RFID signal is received by the RFID signal transceiver unit, the signal is demodulated by the MODEM unit and then decoded in accordance with the RFID protocol loaded in the main controller 13 by the codec unit. Then, the decoded signal is sent to the memory card interface to be received by the handheld device. As described above, the memory card may be connected to any other handheld terminal via the memory card interface 10, as long as the handheld terminal has an interface to accommodate the memory card. The handheld device performs read/write control for the memory card by installing a driver for the memory card in the operating system (OS) of the handheld device.

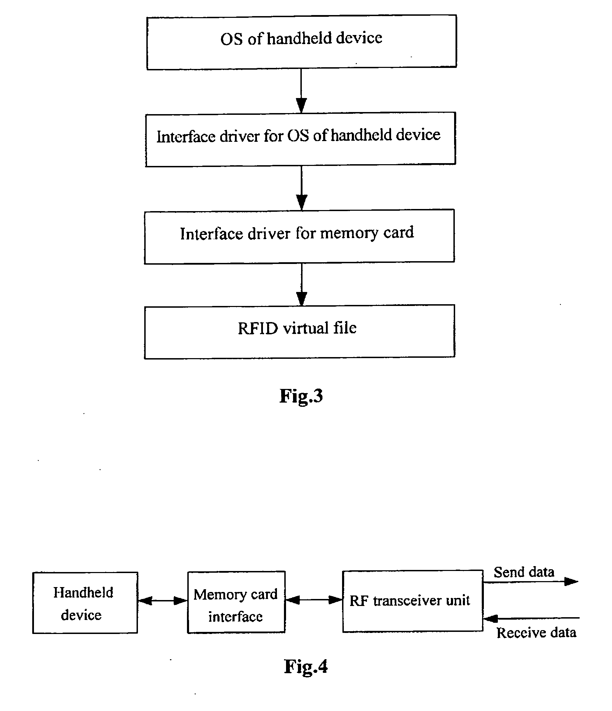

A handheld device is provided in an embodiment of the present invention. The following explanation will be made in connection with a particular application of the handheld device. Fig. 3 is a schematic diagram of OS software hierarchy of the handheld device according to an embodiment of the invention. As seen from Fig. 3, the OS of the handheld device includes an interface driver for the handheld device, while an interface driver for the memory card is below the interface driver for the handheld device. Therefore, the OS of the handheld device ensures that the handheld device can operate the memory card inserted therein, including reading the data stored in the memory card and writing the data in the handheld device into the memory card. And the handheld device can read or write the files derived from RFID information. In that case, from the viewpoint of the handheld device, the memory card inserted in the handheld device is equivalent to an accessible space mapped to the file system of the handheld device, and the handheld device can perform read/write operation for the memory card through the driver on its OS. As seen from Fig. 3, an RFID virtual file is below the interface driver for the memory card. Through the RFID virtual file, the handheld device can access and configure the RFID unit in the memory card. Due to the handheld device's configuration capability for the RFID unit, the RFID data in the memory card is no longer unchangeable but can be updated in real time.

The OS shown in Fig. 3 mainly operates on the memory card shown in Fig. 2. With respect to actual implementation of the handheld device and associated memory card format, the OS of the handheld device has already included the driver for the memory card in itself. The memory card driver interface shields characteristics of the memory card to the OS interface of handheld device on its upper layer, and thereby implements transparent access to the memory card. The software portion can be implemented by the handheld device developer during the software development process, and compatibility can be taken into consideration at that time. Therefore, it can support the memory card in the handheld device. For the OS of the handheld device, the memory card is a part of its software files. Thereby, the access to the memory card is just the access to the memory card file. And the handheld device can read or write the files derived from RFID information. In this way, the work of programming a software driver and an application interface for each host software system separately is avoided.

Fig. 4 is a flowchart of RFID signal processing in the handheld device according to an embodiment of the invention. The handheld device may be extended to include RFID function by controlling the memory card interface. RFID signals are transmitted into the handheld device via the RFID transceiver unit of the memory card and the memory card interface. The data processed in the handheld device is returned in the original path, and finally sent out by the RFID transceiver unit. In this way, the entire process of RFID function is accomplished in the handheld device.

The above description is only preferred embodiments of the invention. It should be noted that those skilled in the art can make improvements and embellishments to the embodiments without departing from the principle of the invention. Such improvements or embellishments should be considered as falling into the scope of the invention.

## Claims

1. A system, comprising:
a terminal equipment and a memory card;
the memory card further comprising:
a memory unit adapted to store data comprising RFID configuration information and RFID data;
a memory card interface (10) adapted to exchange data stored in the memory unit with the terminal equipment; and
an RFID function unit (12) adapted to configure itself with the RFID configuration information stored in the memory unit and identify received radio frequency signals, said RFID function unit is further adapted to demodulate the radio frequency signals into corresponding RFID data; wherein the terminal equipment performs read or write control for the memory card by installing a driver for the memory card in the operating system of the terminal equipment,
**characterized in that** the memory card is further adapted to exchange the data stored in the memory unit with the terminal equipment, when the memory card is mapped to the file system of the terminal equipment, equipment is adapted to the terminal access and configure the RFID unit in the memory card through an RFID virtual file; so that the RFID data in the memory card can be updated in real time by the terminal's configuration capability for the RFID unit in the memory card.

2. The system according to claim 1, wherein the RFID function unit (12) is an RFID card reader unit.

3. The system according to claim 2, wherein the RFID card reader unit comprises:
a codec unit for encoding/decoding RFID data in accordance with card reading function as specified in RFID protocol;
a MODEM unit for modulating the RFID data into corresponding RFID signals or demodulating RFID signals into corresponding RFID data;
an RFID signal transceiver unit for sending/receiving the RFID signals to/from the MODEM unit.

4. The system according to claim 3, wherein the RFID signal transceiver unit is a coupling antenna.

5. The system according to claim 1, wherein the RFID function unit (12) is an RFID transponder unit.

6. The system according to claim 5, wherein the RFID transponder unit comprises:
a codec unit for encoding/decoding RFID data in accordance with induction function as specified in RFID protocol;
a MODEM unit for modulating the RFID data into corresponding RFID signals or demodulating RFID signals into corresponding RFID data;
an RFID signal transceiver unit for sending/receiving the RFID signals to/from the MODEM unit.

7. The system according to claim 1, wherein the RFID configuration information is RFID configuration information in diverse RFID protocols.

## Patentansprüche

1. System, umfassend:
ein Endgerät und eine Speicherkarte;
wobei die Speicherkarte ferner Folgendes umfasst:
eine Speichereinheit, die dafür ausgelegt ist, Daten zu speichern, die RFID-Konfigurationsinformationen und RFID-Daten umfassen;
eine Speicherkartenschnittstelle (10), die dafür ausgelegt ist, in der Speichereinheit gespeicherte Daten mit dem Endgerät auszutauschen; und
eine RFID-Funktionseinheit (12), die dafür ausgelegt ist, sich mit den in der Speichereinheit gespeicherten RFID-Konfigurationsinformationen zu konfigurieren und empfangene Hochfrequenzsignale zu identifizieren, wobei die RFID-Funktionseinheit ferner dafür ausgelegt ist, die Hochfrequenzsignale zu entsprechenden RFID-Daten zu demodulieren;
wobei das Endgerät durch Installieren eines Treibers für die Speicherkarte in dem Betriebssystem des Endgeräts Lese- oder Schreibsteuerung für die Speicherkarte durchführt,
**dadurch gekennzeichnet, dass**
die Speicherkarte ferner dafür ausgelegt ist, die in der Speichereinheit gespeicherten Daten mit dem Endgerät auszutauschen, wenn die Speicherkarte auf das Dateisystem des Endgeräts abgebildet wird,
das Endgerät dafür ausgelegt ist, auf die RFID-Einheit in der Speicherkarte durch eine virtuelle RFID-Datei zuzugreifen und sie zu konfigurieren, so dass die RFID-Daten in der Speicherkarte durch die Konfigurationsfähigkeit des Endgeräts für die RFID-Einheit in der Speicherkarte in Echtzeit aktualisiert werden können.

2. System nach Anspruch 1, wobei die RFID-Funktionseinheit (12) eine RFID-Kartenlesereinheit ist.

3. System nach Anspruch 2, wobei die RFID-Kartenlesereinheit Folgendes umfasst:
eine Codec-Einheit zum Codieren/Decodieren von RFID-Daten gemäß Kartenlesefunktion wie in dem RFID-Protokoll spezifiziert;
eine MODEM-Einheit zum Modulieren der RFID-Daten zu entsprechenden RFID-Signalen oder Demodulieren von RFID-Signalen zu entsprechenden RFID-Daten;
eine RFID-Signalsender-/-empfängereinheit zum Senden/Empfangen der RFID-Signale zu/von der MODEM-Einheit.

4. System nach Anspruch 3, wobei die RFID-Signalsender-/-empfängereinheit eine Koppelantenne ist.

5. System nach Anspruch 1, wobei die RFID-Funktionseinheit (12) eine RFID-Transpondereinheit ist.

6. System nach Anspruch 5, wobei die RFID-Transpondereinheit Folgendes umfasst:
eine Codec-Einheit zum Codieren/Decodieren von RFID-Daten gemäß Induktionsfunktion wie in dem RFID-Protokoll spezifiziert;
eine MODEM-Einheit zum Modulieren der RFID-Daten zu entsprechenden RFID-Signalen oder Demodulieren von RFID-Signalen zu entsprechenden RFID-Daten;
eine RFID-Signalsender-/-empfängereinheit zum Senden/Empfangen der RFID-Signale zu/von der MODEM-Einheit.

7. System nach Anspruch 1, wobei die RFID-Konfigurationsinformationen RFID-Konfigurationsinformationen in diversen RFID-Protokollen sind.

## Revendications

1. Système, comprenant :
un équipement terminal et une carte mémoire ;
la carte mémoire comprenant en outre :
une unité de mémoire adaptée pour mémoriser des données comprenant des informations de configuration RFID et des données RFID ;
une interface de carte mémoire (10) adaptée pour échanger des données mémorisées dans l'unité de mémoire avec l'équipement terminal ; et
une unité de fonction RFID (12) adaptée pour se configurer avec les informations de configuration RFID mémorisées dans l'unité de mémoire et pour identifier des signaux de fréquence radioélectrique reçus, ladite unité de fonction RFID étant adaptée en outre pour démoduler les signaux de fréquence radioélectrique en données RFID correspondantes ;
dans lequel l'équipement terminal exécute une commande de lecture ou d'écriture de la carte mémoire en installant un pilote de la carte mémoire dans le système d'exploitation de l'équipement terminal, **caractérisé en ce que**
la carte mémoire est adaptée en outre pour échanger les données mémorisées dans l'unité de mémoire avec l'équipement terminal, quand la carte mémoire est mappée avec le système de fichiers de l'équipement terminal,
l'équipement terminal est adapté pour solliciter et configurer l'unité RFID dans la carte mémoire par le biais d'un fichier virtuel RFID de telle sorte que les données RFID dans la carte mémoire puissent être actualisées en temps réel par la capabilité de configuration du terminal de l'unité RFID dans la carte mémoire.

2. Système selon la revendication 1, dans lequel l'unité de fonction RFID (12) est une unité de lecteur de carte RFID.

3. Système selon la revendication 2, dans lequel l'unité de lecteur de carte RFID comprend :
une unité de codec pour coder/décoder les données RFID selon la fonction de lecture de carte spécifiée dans le protocole RFID ;
une unité de MODEM pour moduler les données RFID en signaux RFID correspondants ou démoduler les signaux RFID en données RFID correspondantes ;
une unité d'émetteur-récepteur de signaux RFID pour envoyer/recevoir les signaux RFID vers/depuis l'unité de MODEM.

4. Système selon la revendication 3, dans lequel l'unité d'émetteur-récepteur de signaux RFID est une antenne de couplage.

5. Système selon la revendication 1, dans lequel l'unité de fonction RFID (12) est une unité de transpondeur RFID.

6. Système selon la revendication 5, dans lequel l'unité de transpondeur RFID comprend :
une unité de codec pour coder/décoder les données RFID selon la fonction d'induction spécifiée dans le protocole RFID ;
une unité de MODEM pour moduler les données RFID en signaux RFID correspondants ou démoduler les signaux RFID en données RFID correspondantes ;
une unité d'émetteur-récepteur de signaux RFID pour envoyer/recevoir les signaux RFID vers/depuis l'unité de MODEM.

7. Système selon la revendication 1, dans lequel les informations de configuration RFID sont des informations de configuration RFID dans divers protocoles RFID.
